# EUROPEAN PATENT SPECIFICATION

(11) **EP 1 479 988 B1**
(45) Date of publication and mention of the grant of the patent: **21.11.2012**
(21) Application number: 04012042.0
(22) Date of filing: 21.05.2004
(51) Int. Cl.: F25D 29/00, H01Q 1/22

(54) **Household appliance, particularly a refrigeration apparatus, with a control system using sensor means based on RFID technology**
Haushaltsgerät, insbesondere Kühlgerät, mit einem Steuerungssystem mit auf RFID-Technik basierenden Sensoren
Appareil ménager, en particulier appareil frigorifique, avec un système de contrôle utilisant des capteurs basés sur la technologie RFID

(30) Priority: 23.05.2003 IT to20030382
(43) Date of publication of application: 24.11.2004
(73) Proprietor: Indesit Company S.p.A., 60044 Fabriano (AN) (IT)
(72) Inventor: Aisa, Valerio, 60044 Fabriano (IT)
(74) Representative: Gallarotti, Franco

(56) References cited:
- EP-A- 1 152 316
- EP-A1- 1 209 757
- WO-A-02/35432
- GB-A- 2 308 947
- JP-A- 2001 317 741
- JP-A- 2002 267 335
- US-A- 5 421 247

## Description

The present invention relates to a household appliance having an electronic control system and sensor means for detecting one or more physical quantities.

Household appliances control systems require, as every other kind of control system, proper sensors for detecting the value of physical quantities to be controlled, and the result of their action is more effective, as greater is the number and the quality of the used sensors. The use of a proper number of sensors, however, is often limited especially by their cost, which in the case of household appliances represents an important bond to be respected.

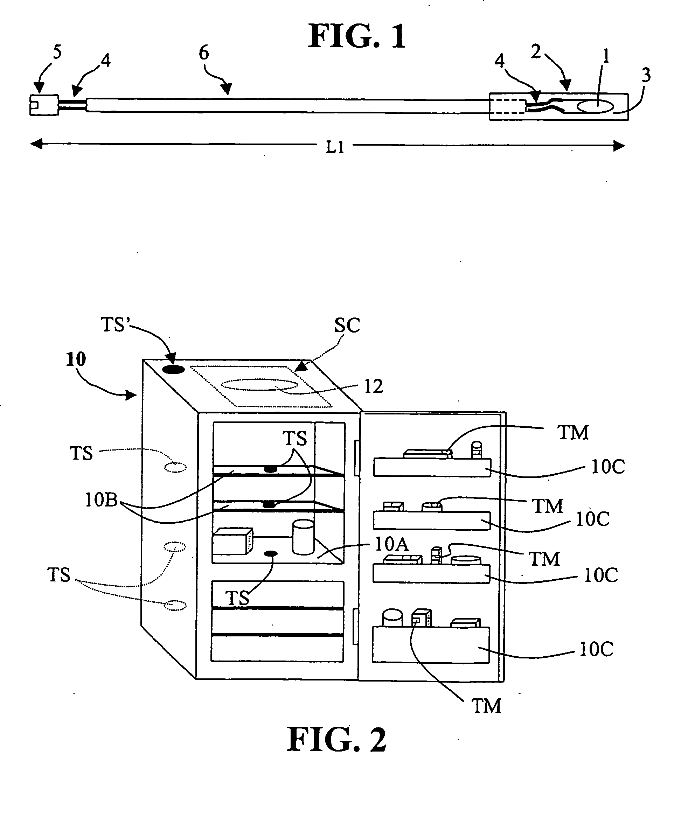

By analyzing the cost components associated with a generic sensor for household appliances (such as a temperature, water level, pressure, humidity, ice, smells, etc. sensor) it is noted that most of the cost is to be assigned not so much to the sensitive element, namely the real sensor, as to the container and the wiring thereof. In order to better explain this aspect, it can be considered the case of control systems and sensors concerning the equipments sector for the home refrigeration. In this case, the used sensors which are mainly dedicated to the temperature detection within the different compartments assigned to the preservation of different kinds of food, typically consist of three main parts, as diagrammatically pointed out in figure 1:
- a sensitive element 1 detecting the temperature value,
- a plastic shell 2 in which the sensitive element 1 is tightly encapsulated by an appropriate protective resin 3,
- a cable connecting the sensitive element to the control system of the household appliance.

The temperature-sensitive element 1 can be embodied with different technologies, but the sensor type usually used in the household appliances sector consists of a NTC-like thermistor, that is a non linear economical resistor obtained by mixing proper oxides, the resistance of which varies in a reverse way with the room temperature in which it is placed. The cable connecting the sensitive element 1 to the control system typically consists of two wires 4 which end with a proper connector 5; in applications in which, for electrical safety reasons, a strengthened galvanic insulation is requested, the two-wires cable 4 is further protected with an appropriate insulating sheath 6.

The number of temperature sensors used for home refrigerators and/or freezers depends on the complexity of the same and, in particular, on the numbers of compartments with a different temperature to be controlled. This temperature sensor number usually changes from a minimum of one unit to a maximum of five or six units; a further increase of this number, although it should be desirable in the case of complex products, is prevented by the typical limits of the present technology. These limits mainly concern the following three aspects: the cost, the wiring and connections complexity, the difficult in placing each sensor within the household appliance. The sensor cost is of the order of one Euro (a non negligible value for the household appliances sector) and does not concern so much the sensitive element 1, which usually does not exceed 10 Euro cents, as rather the air tight container 2-3 of the sensitive element 1 and the connecting means 4-6 of the same with the control system. The wiring and connections complexity is due to the fact that each sensor requires an own supply cable 4, 6 and an own connector 5, as the possible consolidation in a single wiring should result difficult to handle during the product assembly, the different sensors usually being placed in positions rather far therebetween. It is also to be considered that in the case, for instance, of home refrigerators, the length L1 between the connector and the shell 2 of the sensitive element may be up to 2-2,5 meters. The positioning difficulty depends on that cables 4, 6 associated with each sensor must be suitably integrated within the refrigerator body, for ensuring a suitable protection and meeting the aesthetical requirements associated with this kind of product. Such integration is typically carried out by the aid of appropriate cable troughs, wherein the temperature sensors and the respective wirings are inserted, and such cable troughs are generally obtained by integrating proper sheaths within the refrigerator walls. Consequently, with the increasing number of the temperature sensors, also the cable troughs needed for their positioning are increasing, and this involves an obvious rise of assembly times and costs of the product and a total decrease of the thermal insulation of the walls thereof, caused by the tunnel passages of the different temperature probes, which render less homogeneous the polyurethane foam typically used as insulating material, by increasing thermal dispersions in the surroundings.

Remarks like those above mentioned further apply to other types of sensors, which are usually used in the household appliances sector.

The present invention intends to overcome the aforesaid prior art limits, for improving the overall performances of an household appliance, particularly a refrigeration apparatus, by reducing its cost and simplifying at the same time the manufacturing and use procedures thereof.

This and other purposes are achieved, according to the present invention, by a household appliance having the features of the appended claims, which are to be intended as an integral part of the present invention.

Further aims, features and advantages of the invention will become apparent from the following description with reference to the enclosed drawings, which are given as not limitative example, wherein:
- figure **1** diagrammatically shows a temperature sensor of a known type, typically used in the home refrigerators sector;
- figure **2** diagrammatically shows a household appliance carried out according to the invention;
- figure **3** diagrammatically shows a first type transponder, equipped with read/write memory by an external antenna, used for a particularly advantageous implementation of the invention;
- figure **4** diagrammatically shows a second type transponder, used in the basic implementation of the present invention, equipped with sensor means capable of measuring a determined quantity and sending this value to an external antenna;
- figure **5** diagrammatically shows the layout of a sensor device which, according to the invention, can advantageously replace the sensor of figure 1 in the same application;
- figure **6** shows a possible block diagram of a control system for household appliances according to the invention;
- figure **7** diagrammatically shows a particularly advantageous application of the present invention.

According to the invention, it is proposed a household appliance equipped with a control system which uses at least one sensor device lacking of wiring, equipped with at least one physical quantity-sensitive element and a proper local control electronics, which supply is obtained from the energy irradiated by an external transceiver antenna.

According to the invention, the aforesaid local control electronics is carried out using the known transponders technology (RFID technology), that is radio-frequency electronic devices without an autonomous supply, which are well known per se and do not need a detailed description herein.

For the purposes of the invention, in fact, it suffices to remember that a transponder is an electronic device provided with a nonvolatile memory and proper means allowing an external apparatus to read and write data within said memory through a radio-frequency communication system; moreover, not having typically an autonomous supply system, said device takes its supply voltage by drawing energy from the same electromagnetic field used by the transceiver external apparatus connected therewith.

The use of transponders has already been proposed in the household appliances sector, but with different implementation and aims with respect to the present invention. In particular, EP-A-0 911 710, upon which the preamble of claim 1 is based, discloses a process for treating clothes in a washing-machine, wherein the clothes to be washed are provided with a product information containing-transponder (for instance the kind of fabric, colour and weight thereof, recommended washing parameters and so on) which are read, when each cloth is introduced in the washing-machine, by a proper radio-frequency reading device placed near the inlet opening of the machine.

Similar teachings are disclosed in JP-A-2001 317741, in connection with microwave ovens, and in JP-A-2002 26 7335, in connection with preservation appliances (this document also providing for the recording of environmental information on a tag associated to the article to be preserved).

In figure 2, a household appliance carried out according to the invention, in the specific case a refrigerator, is indicated by 10. The main feature of the control system of the household appliance 10 is represented by the presence of "transponder sensors" TS, TS', provided with one or more physical quantity sensitive elements and used for controlling the functionality of the household appliance, wherein the information generated by said sensors may be "read" by a suitable reader device, in the following designated by 11. Said reader device 11 is preferably able to simultaneously read transponders TM as well, provided with a memory containing useful information concerning the optimal procedures for treating the consumer material or, more generally, the item or product on which the action of the household appliance 10 is carried on (foods, drinks, fabric items, etc.), the transponders TM being suitably associated with such items, for instance in the form of labels.

The reading of the information associated with the above said two types of transponders TS, TM is carried out with procedures per se known, by means of one or more antenna 12, properly placed within the household appliance 10 and connected with the electronic control system of the same; the communication standard associated with the two types of transponders TS, TM is preferably the same, for example any one of those now available or which can be developed in the future. In the preferred embodiment of the present invention, relating to refrigerators and/or freezers, both the two kinds of transponders TS, TM use ISO-15693 standard, already adopted by various transponder manufacturers, such as Philips, Texas Instruments, Fujitsu, Hitachi, Motorola.

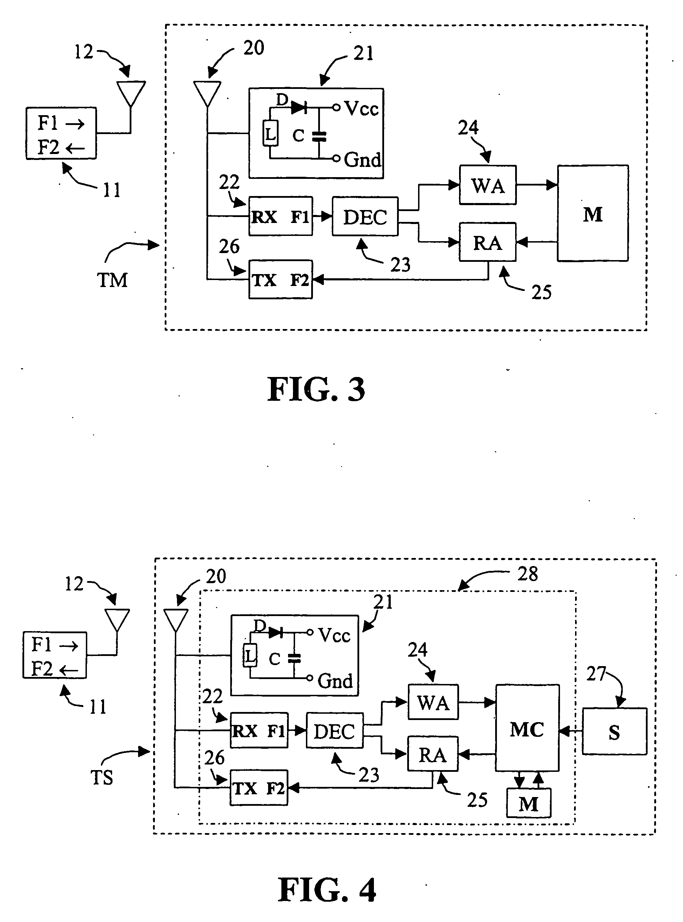

A non limitative example of the architecture of the transponder TM possibly associated with the consumer material treated by the household appliance 10 is illustrated in detail in figure 3, in which the block 21 represents the principle diagram, known per se, of the circuit with which the supply voltage of the local electronics is generated by drawing energy from the magnetic field associated with a carrier F1 of the signal irradiated by a transceiver antenna 12 of the aforesaid reader 11: this occurs by rectifying with a proper diode D the alternating current, which is induced by the Faraday's law upon the coil L by the said carrier F1 received through an antenna 20 of the transponder TM, and by charging with this current an appropriate capacitor C. The modulation signal of the carrier F1, transmitted by the external antenna 12 and received by the antenna 20 of the transponder TM, is opportunely obtained by a receiver 22 and decoded by a decoder 23 in such a way that the transponder control logic may carry out possible writing operations through writing means 24, or reading operations through reading means 25, concerning a nonvolatile memory M.

The control logic of the transponder TM is capable as well, in turn, to selectively transmit, by a transmitter 26 through the same antenna 20, the data contained in the memory M, through the proper modulation of a second carrier F2 that the reader 11 is able to receive through the antenna 12 thereof.

The architecture of the transponder sensor TS, illustrated in figure 4, is substantially the same than the transponders TM, except that it is characterized by a more sophisticated control logic, based on a small low consumption micro-controller MC or upon an equivalent dedicated control logic (ASIC), by a measuring device 27 including one or more sensitive elements S and by a nonvolatile memory M which, in addition to the data received through the antenna 20, may also contain the values generated by the measuring device 27.

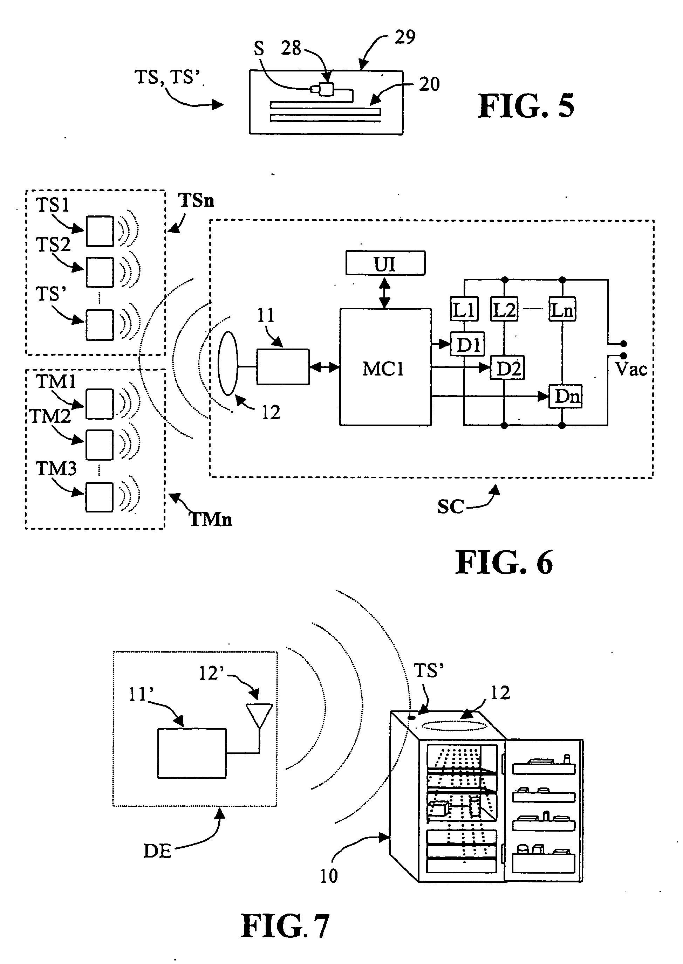

In figure 5, a possible physical layout of a transponder sensor TS or TS' is diagrammatically represented, relating to the preferred embodiment of the invention concerning the control systems for refrigerators and freezer.

This transponder sensor TS, which has a sensitive element S for detecting the room temperature in which it is placed, has very reduced dimensions (typically in the order of 2-3 cm²) with regards to a temperature probe such as that of figure 1, and does not need any wiring toward the control system of the household appliance 10. The same also applies in the case in which the physical quantity detected by the sensitive element S of the transponder TS is different from the temperature, being for instance humidity, thickness of ice accumulated upon the internal wall of the refrigerator, smells, etc.

The control electronics 28 (represented by blocks 21-26, MC and M of figure 4), the antenna 20 and the sensitive element S are incorporated within a proper protective membrane 29, according to known transponder industrialization techniques.

In a preferred embodiment of the invention, at least one of the transponder sensors TS, namely the one indicated by TS' in figure 2, is opportunely positioned in the household appliance 10 in order to detect information concerning the outside environment (such as, for instance, the room temperature and/or air moisture value) in which it is operating; furthermore, this transponder sensor TS' can have advantageously a nonvolatile memory M which can be read and written through an electromagnetic field by a unit being external to the household appliance 10 as well, for favouring the logistic management and the technical assistance thereof on place and finally the manufacturer identification, for a proper disposal at the end of the service life, as described below.

The information supplied by the transponder sensors TS, TS' resulting from detections executed through the respective sensitive elements S are used for managing, with procedures per se known, the functionality of the household appliance 10.

The information supplied by the transponder TM, associated with the items or materials treated by the household appliance (such as foods or drinks in case of refrigerators and freezers, foods and dishes in case of ovens, fabric clothes in case of washing-machine, etc.) are instead used for improving the treatment itself by the household appliance, and facilitating the use by the user (for instance: setting or correction of parameters of a washing program, alarm emission with the approaching of the expiry date of a preserved food, etc.), also in this case with known procedures.

Positioning of the transponder sensors TS can be associated with fixed elements belonging to the household appliance body, for instance walls, fixed support shelves, inner spaces. In a particularly advantageous embodiment, sensors TS are associated with moving elements of the household appliance, such as removable support shelves of refrigerators and ovens, "ball" shaped movable dispenser of washing-machine detergents and so on; in this case, in fact, the lacking of wirings allows a transponder sensor to detect the value of the respective physical quantity exactly in the point or place in which one wishes to detect it, in order to optimize the household appliance control.

In the case exemplified in figure 2, concerning a refrigeration home apparatus, it can be seen for this purpose:
- the transceiver antenna 12 used for the dialog with the transponders TS, TS', TM;
- first transponder sensors TS provided with a temperature sensitive element, or possibly sensitive to an other physical quantity typical of a refrigeration apparatus, inserted within the walls of the refrigerator 10 and within the fixed support shelf 10A of the cabinet of this latter;
- second transponder sensors TS provided with a temperature sensitive element, or possibly sensitive to an other physical quantity typical of a refrigeration apparatus, inserted within the movable support shelf 10B of the cabinet;
- a transponder sensor TS', whose sensitive element/s are measuring the outside environment temperature and/or humidity;
- transponders TM associated with preserved food packages, placed for example upon containers 10C of the refrigerator 10 or upon the inner shelves thereof. Transponders TM can be associated, for example, in the form of labels, directly to the items or materials used in the household appliance.

Figure 6, which diagrammatically represents a control system according to the invention, points out three main blocks:
- block SC, describing the real control system of the household appliance 10;
- block TSn, generally representing the ensemble of the transponder sensors TS (TS1, TS2,...TS') stably associated with the household appliance 10, and
- block TMn, generally representing the ensemble of the transponders TM (TM1, TM2,...) possibly associated with the consumer goods to be treated by the household appliance 10.

The control system SC is based on the use of a micro-controller MC1 which manages, through a proper interface UI equipped with buttons and/or knobs and/or numerical o graphic displays, the dialog with the user and which controls by way of proper actuators D1, D2, ...Dn, consisting of mechanical and/or electronic relays (triac), the different electrical loads L1, L2, ... Ln of the household appliance which are fed by the mains voltage Vac. The micro-controller MC1 then controls the transponder reader means consisting of the reader 11 and the respective antenna 12.

In the control system SC, the micro-controller MC manages the operation of the household appliance 10 according to information generated by the means S belonging to the transponder sensors TS, in addition to information possibly arising from traditional sensors (not represented). As above-mentioned, at least one among these sensor means, that is the one associated with the transponder sensor TS', is able to detect the value of one or more physical quantities related to the outside environment (such as temperature, humidity, etc.). Sensor means 11, 12 within the household appliance 10 are also provided for reading/writing the content of the memories M of the transponders TM possibly associated with the consumer material treated by the household appliance 10.

The preferred embodiment of the present invention refers to the control systems for home refrigeration apparatus, such as refrigerators and freezers.

A first advantage of this embodiment according to the invention is that conventional temperature sensors, represented by temperature probes (figure 1) with different length and hard positioning, are replaced with wireless sensors TS, TS', which are less expensive and can be easily positioned within the inner walls of the household appliance and within the moving shelves thereof as well, so allowing a more effective temperature control at the different inner zones of the household appliance.

A second advantage is that, according to the invention, at least one TS'-like transponder sensor, with one or more sensitive elements S therein, is placed in such a way that the value of one or more physical quantities outside the refrigerator can be detected, such as the outside environment temperature and humidity.

Finally, a third advantage according to the invention is that the antenna 12 used for the dialog with the sensors TS is also able to read the content of the memory M of the transponders TM, possibly associated with the food packages being stored, by using a same communication standard.

In figure 7 there is diagrammatically illustrated a possible, particularly advantageous alternative embodiment of the invention. According to this variation, the transponder sensor TS' is located in such a way that its inner memory M can be read and written, in addition to the above-mentioned reader means 11 and 12 within the household appliance, by appropriate external means, represented by a reader 11' equipped with a respective antenna 12' and belonging to an external electronic device DE, provided for managing complementary functions. In this way, the transponder sensor TS' is able to dialog both with the control system SC of the household appliance 10, through the reader 11 and the antenna 12, and with the outside represented by the device DE, through the reader 11' and the antenna 12', in order to carry out the following functions:
- logistic functions, concerning the sorting and the drawing ability of the household appliance, for instance during the productive and storage steps, based on the known concept of "electronic bar code", typically associated with the transponder devices;
- maintenance and technical assistance functions of the household appliance, concerning the possibility of leaving a trace, e.g. within the memory M of the sensor TS' (shared between the control system SC and appropriate external devices DE), concerning the mistory of the different maintenance operation;
- aid functions for the proper disposal of the household appliance at the end of its service life, based on the possibility of exploiting appropriate information, initially stored, for instance, within the memory M of the transponder TS', concerning the manufacturer, used materials and their recycling degree.

## Claims

1. Household appliance (10), particularly a refrigeration apparatus, having an electronic control system (SC) for the operative management of the apparatus (10), the control system (SC) comprising:
- transponder reader means (11, 12),
- detector means of one or more physical quantities, the value of said physical quantity or quantities being used by the control system (SC) for managing the operation of the household appliance (10),
- actuator means (D1, D2, Dn) for managing electrical loads (L1, L2, Ln),
- user interface means (UI),
**characterized in that**
- said detector means comprise one or more sensor devices (TS, TS') free of wiring and own supply, each having at least one sensitive element (S) for detecting the value of a physical quantity of the apparatus (10) and/or useful for the control thereof, and an electronic control circuit (20, 28) which, implementing the functions proper of a transponder, is able to obtain its supply voltage by drawing energy from the electromagnetic field generated by a radio-frequency communication signal irradiated through said reader means (11, 12),
- said electronic control circuit (20, 28) is designed for sending to said reader means (11, 12), in the presence of said radio-frequency communication signal irradiated by the same reader means (11, 12), data being representative of detections performed through a respective sensitive element (S).

2. Household appliance according to claim 1, **characterized in that** said reader means (11, 12) are designed for carrying out, at the same time, the reading of transponder (TM) possibly associated with items on which the action of the household appliance (10) is carried out, said transponders being equipped with nonvolatile memory means (M) containing useful information concerning the optimal procedures for treating said items.

3. Household appliance according to claim 1, **characterized in that** the sensitive element (S) of at least one sensor device (TS') is designed for detecting the value of a physical quantity associated with the outer environment of the household appliance (10).

4. Household appliance according to claim 1, **characterized in that** at least one sensor device (TS') comprises a memory (M) that can be read and/or written by reader means (11', 12') being external to the household appliance (10).

5. Household appliance according to claim 2, **characterized in that** said reader means (11, 12, 11', 12') and said transponders (TS, TS', TM) operates according to a same communication standard, particularly the ISO-15693 standard.

6. Household appliance according to claim 4, **characterized in that** said memory (M) contains useful information for meeting at least one of the following requirements:
- logistic management of the household appliance (10),
- maintenance or technical assistance of the household appliance (10),
- disposal of the household appliance (10) at the end of the service life thereof, such information including, in particular, one or more of the following: identification data of the household appliance manufacturer, materials used for manufacturing the household appliance (10), recycling degree of said materials.

7. Household appliance according to claim 1, **characterized in that** at least one sensor device (TS, TS') is associated with a movable component or accessory (10B, 10C) of the household appliance (10).

8. Household appliance according to claim 1, **characterized in that** said electronic control circuit (20, 28) and said sensitive element (S) are integrated within a same protective membrane (29) of the respective sensor device (TS, TS').

9. Household appliance according to one or more of the preceding claims, **characterized in that** it is a home refrigeration apparatus (10), such as a refrigerator or a freezer, and a plurality of said sensor devices (TS, TS') is provided, whose detected physical quantity belongs to one of the following: inner temperature of the apparatus (10), temperature outside the apparatus (10), air humidity within the apparatus (10), environment humidity outside the apparatus (10), thickness of ice accumulated upon the inner walls of the apparatus (10), existing smells within the apparatus (10).

10. Household appliance according to one or more of claims 2 to 8, **characterized in that** it is a refrigeration apparatus (10) and **in that** said detector means include one or more of said sensor devices (TS, TS') free of wiring and own supply, each having at least one sensitive element (S) for detecting the value of a temperature.

## Patentansprüche

1. Haushaltsgerät (10), insbesondere ein Kühlgerät, das ein elektronisches Steuersystem (SC) für die Betriebsverwaltung des Gerätes (10) umfasst, wobei das Steuersystem (SC) beinhaltet:
- Transponder-Leseeinrichtungen (11, 12),
- Detektoreinrichtungen für wenigstens eine physikalische Größe, wobei der Wert der physikalischen Größe oder Größen von dem Steuersystem (SC) verwendet wird, um den Betrieb des Haushaltsgerätes (10) zu verwalten,
- Betätigungseinrichtungen (D1, D2, Dn) zur Verwaltung elektrischer Verbraucher (L1, L2, Ln), und
- Benutzerschnittstelleneinrichtungen (UI),
**dadurch gekennzeichnet, dass**
- die Erfassungseinrichtungen eine oder mehrere Sensorvorrichtungen (TS, TS'), die keine Verdrahtung und eigene Stromversorgung haben, die jeweils wenigstens ein empfindliches Element (S) zum Erfassen des Wertes einer physikalischen Größe des Gerätes (10) haben und/oder sich für die Steuerung derselben eignen, sowie einen elektronischen Steuerschaltkreis (20, 28) umfassen, der unter Anwendung der Funktionen, die sich für einen Transponder eignen, in der Lage ist, seine Versorgungsspannung dadurch zu beziehen, dass er Energie aus dem elektromagnetischen Feld gewinnt, das durch ein Hochfrequenz-Kommunikationssignal erzeugt wird, das durch die Leseeinrichtungen (11, 12) abgestrahlt wird,
- wobei der elektronische Steuerschaltkreis (20, 28) dazu bestimmt ist, zu den Leseeinrichtungen (11, 12) in Gegenwart des Hochfrequenz-Kommunikationssignals, das von diesen Leseeinrichtungen (11, 12) abgestrahlt wird, Daten zu senden, die für Erfassungen repräsentativ sind, die durch ein entsprechendes empfindliches Element (S) gemacht werden.

2. Haushaltsgerät nach Anspruch 1, **dadurch gekennzeichnet, dass** die Leseeinrichtungen (11, 12) dazu bestimmt sind, gleichzeitig das Lesen des Transponders (TM) auszuführen, der möglicherweise mit Aufgaben assoziiert ist, an denen die Tätigkeit des Haushaltsgerätes (10) ausgeführt wird, wobei diese Transponder mit nicht flüchtigen Speichereinrichtungen (M) ausgestattet sind, die nützliche Informationen enthalten, die die optimalen Abläufe für die Handhabung der Aufgaben enthalten.

3. Haushaltsgerät nach Anspruch 1, **dadurch gekennzeichnet, dass** das empfindliche Element (S) wenigstens einer Sensorvorrichtung (TS') dazu eingerichtet ist, den Wert einer physikalischen Größe zu erfassen, die mit der Außenumgebung des Haushaltsgerätes assoziiert ist.

4. Haushaltsgerät nach Anspruch 1, **dadurch gekennzeichnet, dass** wenigstens eine Sensorvorrichtung (TS') einen Speicher (M) umfasst, der von den Leseeinrichtungen (11', 12') gelesen oder beschrieben werden kann und sich außerhalb des Haushaltsgerätes (10) befindet.

5. Haushaltsgerät nach Anspruch 2, **dadurch gekennzeichnet, dass** die Leseeinrichtungen (11, 12, 11', 12') und die Transponder (TS, TS', TM) mit demselben Kommunikationsstandard, insbesondere dem ISO-15693-Standard, arbeiten.

6. Haushaltsgerät nach Anspruch 4, **dadurch gekennzeichnet, dass** der Speicher (M) nützliche Informationen enthält, um wenigstens eine der folgenden Anforderungen zu erfüllen:
- Logistikverwaltung des Haushaltsgerätes (10),
- Wartung oder technische Unterstützung des Haushaltsgerätes (10) und
- Entsorgung des Haushaltsgerätes (10) am Ende der Lebensdauer desselben,
wobei derartige Informationen insbesondere wenigstens eine der folgenden Informationen umfassen: Identifikationsdaten des Haushaltsgeräteherstellers, Materialien, die zur Herstellung des Haushaltsgerätes (10) verwendet werden, und Wiederverwertungsgrad der Materialien.

7. Haushaltsgerät nach Anspruch 1, **dadurch gekennzeichnet, dass** wenigstens eine Sensorvorrichtung (TS, TS') mit einer beweglichen Komponente oder einem Zubehör (10B, 10C) des Haushaltsgerätes (10) verbunden ist.

8. Haushaltsgerät nach Anspruch 1, **dadurch gekennzeichnet, dass** der elektronische Steuerschaltkreis (20, 28) und das empfindliche Element (S) in derselben Schutzmembran (29) der entsprechenden Sensorvorrichtung (TS, TS') integriert sind.

9. Haushaltsgerät nach wenigstens einem der vorhergehenden Ansprüche, **dadurch gekennzeichnet, dass** es ein Haushaltskühlgerät (10), wie etwa ein Kühlschrank oder ein Gefriergerät ist und eine Vielzahl der Sensorvorrichtungen (TS, TS') vorgesehen ist, deren erfasste physikalische Größe zu einer der folgenden Größen gehört: Innentemperatur des Gerätes (10), Temperatur außerhalb des Gerätes (10), Luftfeuchtigkeit innerhalb des Gerätes (10), Umgebungsfeuchtigkeit außerhalb des Gerätes (10), Dicke des Eises, das sich auf den Innenwänden des Gerätes (10) angesammelt hat, und bestehende Gerüche innerhalb des Gerätes (10).

10. Haushaltsgerät nach wenigstens einem der Ansprüche 2 bis 8, **dadurch gekennzeichnet, dass** es ein Kühlgerät (10) ist und die Detektoreinrichtungen wenigstens eine der Sensorvorrichtungen (TS, TS') umfassen, die keine Verdrahtung oder eigene Stromversorgung haben, die jeweils wenigstens ein empfindliches Element (S) zum Erfassen des Wertes einer Temperatur umfassen.

## Revendications

1. Appareil électroménager (10), particulièrement un appareil de réfrigération, comportant un système de commande (SC) électronique pour la gestion du fonctionnement de l'appareil (10), le système de commande (SC) comprenant :
- des moyens formant lecteur de transpondeur (11, 12),
- des moyens formant détecteur d'une ou de plusieurs quantités physiques, la valeur de ladite quantité ou desdites quantités physiques étant utilisée par le système de commande (SC) pour gérer le fonctionnement de l'appareil électroménager (10),
- des moyens formant actionneur (D1, D2, Dn) pour gérer des charges électriques (L1, L2, Ln),
- des moyens formant interface utilisateur (UI),
**caractérisé en ce que**
- lesdits moyens formant détecteur comprennent un ou plusieurs dispositifs formant capteurs (TS, TS') exempts de câblage et d'alimentation propre, comportant chacun au moins un élément sensible (S) pour détecter la valeur d'une quantité physique de l'appareil (10) et/ou utile pour la commande de celui-ci, et un circuit de commande électronique (20, 28) qui, en mettant en oeuvre les fonctions propres d'un transpondeur, est capable d'obtenir sa tension d'alimentation en prélevant l'énergie du champ électromagnétique généré par un signal de communication radiofréquence rayonné à travers lesdits moyens formant lecteur (11, 12),
- ledit circuit de commande électronique (20, 28) est conçu pour envoyer auxdits moyens formant lecteur (11, 12), en présence dudit signal de communication radiofréquence rayonné par les susdits moyens formant lecteur (11, 12), des données représentatives de détections effectuées par l'intermédiaire d'un élément sensible (S) respectif.

2. Appareil électroménager selon la revendication 1, **caractérisé en ce que** lesdits moyens formant lecteur (11, 12) sont conçus pour effectuer, en même temps, la lecture de transpondeur TM éventuellement associée à des éléments sur lesquels l'action de l'appareil électroménager (10) est effectuée, lesdits transpondeurs étant équipés de moyens formant mémoire non volatile (M) contenant des informations utiles concernant les procédures optimales pour traiter lesdits éléments.

3. Appareil électroménager selon la revendication 1, **caractérisé en ce que** l'élément sensible (S) d'au moins un dispositif formant capteur (TS') est conçu pour détecter la valeur d'une quantité physique associée à l'environnement extérieur de l'appareil électroménager (10).

4. Appareil électroménager selon la revendication 1, **caractérisé en ce qu'**au moins un dispositif formant capteur (TS') comprend une mémoire (M) qui peut être lue et/ou écrite par des moyens formant lecteur (11', 12') qui sont à l'extérieur de l'appareil électroménager (10).

5. Appareil électroménager selon la revendication 2, **caractérisé en ce que** lesdits moyens formant lecteur (11, 12, 11', 12') et lesdits transpondeurs (TS, TS', TM) fonctionnent selon une même norme de communication, particulièrement la norme ISO 15693.

6. Appareil électroménager selon la revendication 4, **caractérisé en ce que** ladite mémoire (M) contient des informations utiles pour satisfaire à au moins l'une des spécifications suivantes :
- la gestion logistique de l'appareil électroménager (10),
- la maintenance ou l'assistance technique de l'appareil électroménager (10),
- l'enlèvement de l'appareil électroménager (10) à la fin de la durée de vie de celui-ci, ces informations comprenant, en particulier, un ou plusieurs des éléments suivants : les données d'identification du fabricant de l'appareil électroménager, les matériaux utilisés pour fabriquer l'appareil électroménager (10), le degré de recyclage desdits matériaux.

7. Appareil électroménager selon la revendication 1, **caractérisé en ce qu'**au moins un dispositif formant capteur (TS, TS') est associé à un composant ou un accessoire mobile (10B, 10C) de l'appareil électroménager (10).

8. Appareil électroménager selon la revendication 1, **caractérisé en ce que** ledit circuit de commande électronique (20, 28) et ledit élément sensible (S) sont intégrés dans une même membrane protectrice (29) du dispositif formant capteur (TS, TS') respectif.

9. Appareil électroménager selon une ou plusieurs des revendications précédentes, **caractérisé en ce qu'**il s'agit d'un appareil de réfrigération domestique (10), tel qu'un réfrigérateur ou un congélateur, et une pluralité desdits dispositifs formant capteurs (TS, TS') sont prévus, dont la quantité physique détectée appartient à l'un des éléments suivants : la température intérieure de l'appareil (10), la température extérieure de l'appareil (10), l'humidité de l'air dans l'appareil (10), l'humidité de l'environnement à l'extérieur de l'appareil (10), l'épaisseur de givre accumulée sur les parois internes de l'appareil (10), les odeurs existantes dans l'appareil (10).

10. Appareil électroménager selon une ou plusieurs des revendications 2 à 8, **caractérisé en ce qu'**il s'agit d'un appareil de réfrigération (10) et **en ce que** lesdits moyens formant détecteur comprennent un ou plusieurs desdits dispositifs formant capteurs (TS, TS') exempts de câblage et d'alimentation propre, comportant chacun au moins un élément sensible (S) pour détecter la valeur d'une température.
